# EUROPÄISCHE PATENTANMELDUNG

(11) **EP 0 741 264 A1**
(43) Veröffentlichungstag der Anmeldung: **06.11.1996**
(21) Anmeldenummer: 96107019.0
(22) Anmeldetag: 03.05.1996
(51) Int. Cl.: F21V 21/10

(54) **Scheibenschelle**

(30) Priorität: 05.05.1995 DE 29507553 U
(71) Anmelder: PAUL JORDAN ELEKTROTECHNISCHE FABRIK, GmbH & Co., D-12249 Berlin (DE)
(72) Erfinder: Kunzmann, Jens-Peter, D-13088 Berlin (DE)
(74) Vertreter: Alber, Norbert

(57) **Zusammenfassung**

Die Erfindung betrifft eine Schelle (1), die trotz einfachem und kostengünstigem Aufbau auf einfache Art und Weise und mit jederzeit verfügbarem, einfachem Werkzeug auf die Anzahl und den Durchmesser der hindurchzuführenden Kabel abgestimmt werden kann. Der Schellen-Bausatz für die zugentlastende Verklemmung von Kabeln unterschiedlichen Außendurchmessers, besteht aus einem Oberteil (2), einem Unterteil (42), wenigstens einem Kabeldurchlaß, der durch kreisbogenförmige Ausbuchtungen (3-5,23,24) in Ober- und Unterteil gebildet werden, welche sich von der dem jeweils anderen Teil der Schelle zugewandten Stirnfläche (6,26) aus konkav in das Oberteil bzw. Unterteil hinein erstrecken, die Ausbuchtungen in Längsrichtung (40) versetzt unterschiedliche Radien (37,39) entsprechend der Außendurchmesser der Kabel aufweisen und wobei Oberteil (2) und Unterteil (42) aus wenig nachgiebigem, gut schneidfähigen Material bestehen, wobei Ober- und Unterteil aus in axialer Längsrichtung (40) beabstandeten, dünnen Scheiben (7-12;17-22) bestehen, deren Außenkontur auf der Kontaktseite zum Kabel hin durch die entsprechenden Kreisbögen der Ausbuchtungen (3-5;23,24) gebildet wird und wobei auf der der Kontaktseite abgewandten Seite der Außenkontur des Oberteiles (2) bzw. Unterteiles (42) entspricht und die Scheiben (7-12;17,22) über sich in Längsrichtung (40) erstreckende Verbindungsstege (13-15;33-35) einstückig miteinander verbunden das Oberteil (2) bzw. Unterteil (42) bilden.

## Beschreibung

Die Erfindung betrifft eine Schelle, wie sie beispielsweise in Anschlußkästen von Lichtmasten oder Ähnlichem zur zugentlastenden Befestigung von ankommenden Kabeln verwendet werden. Derartige Schellen bestehen in der Regel aus einem Oberteil und einem Unterteil, die in einer entsprechenden Ausbuchtung zwischen der Oberschale und Unterschale des Anschlußkastens angeordnet werden und dort zwischen sich kraftschlüssig die entsprechenden Kabel aufnehmen.

Dabei besteht das Problem darin, daß von derartigen Schellen bis zu drei Kabel mit unterschiedlichem, aber untereinander gleichem, Durchmesser geklemmt werden müssen, beispielsweise mit 18, 20 oder 22 mm Außendurchmesser.

Zur universellen Anpassung derartiger Schellen an Anzahl und Durchmesser der Kabel ist es bekannt, Durchlässe für drei Kabel nebeneinander anzuordnen, und die Trennebene zwischen Oberteil und Unterteil der Schelle durch die Mittelpunkte dieser beiden Durchlässe zu legen. Dabei ist einer der beiden Durchlässe durch eine Verschlußscheibe, die von einem der beiden Schellenteile abragt, verschlossen. Für die Durchführung durch diesen Durchlaß muß diese Verschlußscheibe durch Abschneiden mit einem Messer entfernt werden.

Im z.B. Schellenoberteil ist ferner mittig zwischen den beiden Durchlässen darüber ein dritter Durchlaß angeordnet, der ebenfalls zunächst verschlossen ist, und für das Hindurchführen eines Kabels mit einem Messer entfernt werden muß.

Dabei besteht ein Problem darin, daß für das Öffnen dieses dritten Durchlasses mit dem Messer ein Durchmesser geschnitten werden muß, für den zwar eine Markierung oder eine entsprechende verdünnte Schnittbahn entsprechend dem Außendurchmesser des hindurchzuführenden Kabels vorhanden ist, aber dennoch muß das Messer in einem Kreisschnitt mit relativ geringem Radius geführt werden, und dies in einem festen Kunststoff.

Dies ist für eine schnelle und problemlose Montage, bei der auch der Mantel des geklemmten Kabels anschließend nicht durch scharfe Vorsprünge der Schelle beschädigt werden soll, eine unbefriedigende Lösung.

Ebenso ist es bekannt, bei den anderen beiden, nebeneinanderliegenden Durchlässen die entsprechenden Außendurchmesser dadurch zu schaffen, daß vom eigentlichen Schellengrundkörper aus nach außen rohrstutzenförmige Fortsätze mit kleiner werdendem Durchmesser abstehen, um so ein Abschneiden des gewünschten Durchmessers mit dem Messer wenigstens in einer planen Ebene parallel zur Hauptebene der Schelle und quer über die Längsrichtung der durchzuführenden Kabel möglich ist.

Die nach außen vorstehenden Fortsätze können jedoch wieder leicht beschädigt werden und ergeben eine in sich wenig stabile und nur begrenzt kraftschlüssige Halterung der Kabel, wenn sie so dimensioniert werden sollen, daß sie noch leicht mit dem Messer durchtrennbar sind.

Es ist daher die Aufgabe gemäß der vorliegenden Erfindung, eine Schelle zu schaffen, die trotz einfachem und kostengünstigem Aufbau auf einfache Art und Weise und mit jederzeit verfügbarem, einfachem Werkzeug auf die Anzahl und den Durchmesser der hindurchzuführenden Kabel abgestimmt werden kann.

Diese Aufgabe wird bei einer gattungsgemäßen Schelle durch die kennzeichnenden Merkmale des Anspruches 1 gelöst. Vorteilhafte Ausführungsformen ergeben sich aus den Unteransprüchen.

Aufgrund des Aufbaus der Schelle durch einzelne, in Längsrichtung der Kabel beabstandete, nur durch dünne Verbindungsstege miteinander verbundene Scheiben kann durch einen planen Messerschnitt quer zur Längsrichtung der Kabel die entsprechende Anzahl von Scheiben von der Schelle abgeschnitten werden, so daß die verbleibende nächste Scheibe gerade die Ausbuchtung mit dem gewünschten Innendurchmesser entsprechend dem vorgesehenen Außendurchmesser der zu klemmenden Kabel aufweist.

In gleicher Weise kann in der dritten Ausbuchtung, die im Schellenoberteil angeordnet ist, prinzipiell die Öffnung dieses dritten Durchlasses bewirkt werden, und dabei wiederum für den entsprechenden Außendurchmesser des gewünschten Kabels.

Auf diese Art und Weise können drei Durchlässe für drei jeweils unterschiedlich große Kabeldurchmesser durch einen Aufbau der Schelle aus nur sechs axial beabstandeten Scheiben erzielt werden.

Eine größere Anzahl von Durchlässen bzw. eine größere Wahlmöglichkeit unter den zur Verfügung stehenden Durchmessern würde eine andere Scheibenanzahl ergeben.

Zusätzlich ist einer der beiden nebeneinanderliegenden Durchlässe, durch deren Mittelpunkte hindurch sich etwa die Trennebene zwischen Oberteil und Unterteil der Schelle erstreckt, mit einer den Durchlaß verschließenden Verschlußscheibe ausgestattet für den Fall, daß nur ein einziges Kabel durch die Schelle hindurchgeführt und mittels dieser geklemmt werden soll. Die Verschlußscheibe befindet sich dabei innerhalb der axialen Erstreckung eines der im wesentlichen axial verlaufenden Verbindungsstege zwischen den Scheiben, und kann somit ebenfalls wieder mittels planer Messerschnitte zwischen den beiden benachbarten Scheiben problemlos herausgeschnitten werden, da vorzugsweise die Verschlußscheibe dünner ist als die axiale Erstreckung des Verbindungssteges zwischen den beiden benachbarten Schellen-Scheiben, so daß zwischen den Stirnflächen der Verschlußscheibe und dem Beginn der nächsten benachbarten Schellenscheiben noch ein axialer Abstand gegeben ist.

Dabei werden vorzugsweise wiederum die axialen Bereiche, die den größten Kabel-Außendurchmessern entsprechen, in der Mitte der Schelle angeordnet, während die Bereiche für die immer kleineren Kabelaußendurchmesser sich zu den Stirnseiten der Schelle hin anschließen. Die im wesentlichen axial verlaufenden Verbindungsstege zwischen den einzelnen Scheiben verlaufen dabei vorzugsweise entlang der kreisbogenförmigen Kontur der Ausbuchtung sowie der Stirnfläche der beiden Schellenteile entlang, so daß bei Betrachtung von dieser Stirnfläche aus die Scheiben der beiden Schellenteile nicht zu erkennen sind.

Zusätzlich zu diesen den Durchlässen benachbarten Verbindungsstegen können sich schmale Verbindungsstege von den Durchlässen radial abstrebend zwischen den Scheiben erstrecken, um die Stabilität der Schelle zu verbessern.

Um dennoch immer ein leichtes Durchtrennen der Verbindungsstege mit dem Messer zu ermöglichen, bewegt sich - je nach Art und Härte des verwendeten Materials bzw. Kunststoffes für die Schelle - deren Dicke im Bereich unter 1 mm, etwa im Bereich von 0,2 - 0,5 mm.

Eine andere Möglichkeit besteht darin, die einzelnen Scheiben mit unterschiedlich groß dimensionierten Ausbuchtungen und auch unterschiedlicher Anzahl von Ausbuchtungen nicht in Längsrichtung axial versetzt zu einer durch Abschneiden zu reduzierenden Schelle zu verbinden, sondern nur lose verbunden oder direkt einzeln als Schellen-Bausatz anzubieten.

Dies hätte einerseits den Vorteil, daß in dem Anschlußkasten nur Führungen vorhanden sein müssen, die zur Ausnahme immer gleich breiter Elemente, nämlich der einzelnen Scheibe, geeignet sein müssen, während bei der vorbeschriebenen Lösung die axiale Erstreckung der zum Einsatz kommenden Schelle bzw. Teile der Schelle wechseln kann. Andererseits sind dadurch von vornherein in axialer Richtung sehr schmale Anlageflächen der Schelle am Kabel vorgegeben, und es kann bei der Montage der Schelle vorkommen, daß auch aus Nachlässigkeit gerade diejenige Einzelscheibe für den beabsichtigten Kabeldurchmesser nicht vorhanden ist, was beim Zusammenstellen des Materials aufgrund des ähnlichen Aussehens der Scheiben leicht vorkommen kann. Bei einer Schelle gemäß der vorbeschriebenen Erfindung sind immer alle für alle möglichen vorkommenden Durchmesser benötigten Teile vorhanden. Bei dem Anbieten von Einzelscheiben können diese Einzelscheiben anstelle in losem Zustand auch über einfache Kunststoffbrücken, wie sie bei der Spritztechnik ohnehin als Angußteile entstehen, sternförmig oder reihenförmig miteinander verbunden sein.

Eine Ausführungsform gemäß der Erfindung ist für eine Bauform mit maximal drei Durchlässen von jeweils maximal drei verschiedenen Kabeldurchmessern im folgenden anhand der Figuren beispielhaft näher beschrieben. Es zeigen:
Fig. 1: eine stirnseitige Ansicht von Schellenoberteil und Schellenunterteil und
Fig. 2: eine Teilschnitt-Darstellung entsprechend II-II in Fig. 1.

Dabei ist zu erkennen, daß von den drei maximal verfügbaren Durchlässen zwei nebeneinander angeordnet sind, und die Trennebene zwischen Oberteil 2 und Unterteil 42 durch die Mittelpunkte dieser Durchlässe verläuft, wodurch im Oberteil halbkreisförmige Ausbuchtungen 3, 4 und im Unterteil halbkreisförmige Ausbuchtungen 23, 24 gebildet werden.

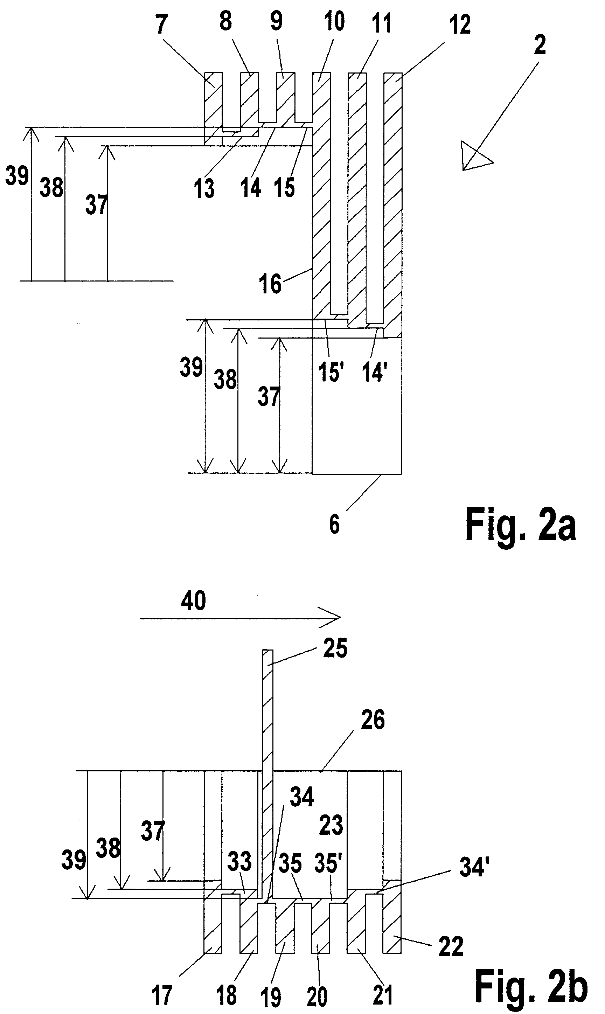

Für das Unterteil 42 ist in der stirnseitigen Ansicht nur der stirnseitig außenliegende kleinste Außendurchmesser 39 eines durchzuführenden Kabels zu sehen, während die axial hierzu zur Mitte in versetzten Bereichen die größeren Außendurchmesser 38, 37 hierdurch abgedeckt werden, wie besser in der Schnittdarstellung der Fig. 2b ersichtlich.

Durch das Abtrennen z.B. der Scheiben 22 und 17 werden die Ausbuchtungen 23 und 24 für ein Kabel mit dem mittleren Radius 38 vorbereitet, ohne gleichzeitig den zweiten Durchlaß, also die Ausbuchtung 23, durch Entfernen der Verschlußscheibe 25 zu öffnen.

Würde dagegen auch durch diesen zweiten Durchlaß ein Kabel mit mittlerem Radius hindurchgeführt werden können, müßte zusätzlich die Verschlußscheibe 25 herausgetrennt werden, was ebenfalls durch einen bzw. zwei ebene Schnitte quer zur Längsrichtung 40 möglich ist.

Im Unterteil 42 der Schelle sind die Bereiche für die einzelnen Radien 37, 38, 39 deshalb doppelt vorhanden, weil im entsprechenden Oberteil 2 diese drei Größenbereiche jeweils sowohl für den geöffneten als auch den verschlossenen dritten Durchlaß vorhanden sein müssen, welcher durch die dritte Ausbuchtung 5 gebildet werden kann, der mittig oberhalb der beiden Ausbuchtungen 3, 4 vorhanden ist.

Im Ausgangszustand des Oberteiles 2 ist diese Ausbuchtung 5 durch die eine Stirnfläche 16 einer Scheibe 10 gebildet, die bezüglich der beiden anderen Ausbuchtungen 3, 4 den Bereich mit dem größten Radius 39 bildet. Durch Abtrennen des Oberteils zwischen den Scheiben 9 und 10 und Verwendung nur des linken Teiles, also einschließlich der Scheiben 7 bis 9, wird die dritte Ausbuchtung 5 geöffnet, und es können drei Kabel hindurchgeführt werden. Dabei wird auch die dritte Ausbuchtung 5 für den entsprechenden Kabelaußendurchmesser dadurch vorbereitet, daß zusätzlich auch noch die Scheibe 7 oder gar die Scheiben 7 und 8 vom Oberteil entfernt werden.

Um bei Abnehmen der Axialerstreckung von Schellenoberteil und Schellenunterteil dennoch eine stabile Halterung für das radiale Abdrücken der Schellenteile am Kabel sicherzustellen, sind vorzugsweise in dem umgebenden Anschlußkasten entsprechende formschlüssige Aufnahmen vorhanden, in die selbst einzelnen Scheiben fest und sicher eingesteckt werden können.

Die in den Figuren 2a und 2b erkennbaren Verbindungsstege 13, 14, 15, 15', 14' des Oberteiles bzw. 33, 34, 35, 35', 34' des Unterteiles sind in axialer Richtung gerade so lange, um gut mit einem Messer zwischen den benachbarten Scheiben hindurch einen planen Schnitt ausführen zu können. Die Verbindungssteg erstrecken sich dabei zwischen zwei Scheiben mit unterschiedlich großem Innenradius an den Ausbuchtungen an einer solchen radialen Stelle, daß ihre Innenfläche mit der Innenfläche der Scheibe mit größerem Innendurchmesser zur Ausbuchtung hin ohne Absatz verläuft.

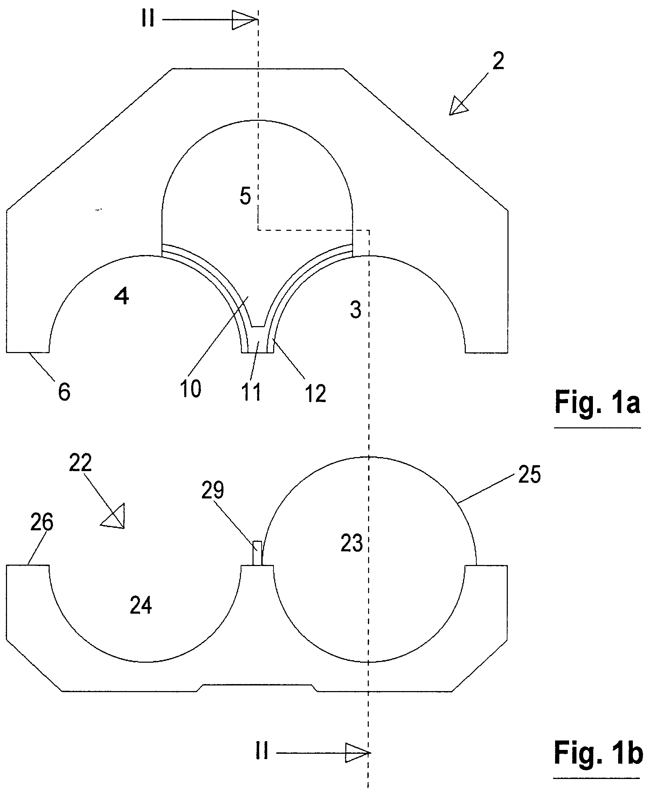

Die Verbindungsstege erstrecken sich entlang der gesamten bogenförmigen Kontur der Ausbuchtungen 3, 4, 5 bzw. 23, 24 sowie entlang der planen Stirnflächen 6, 26 am Schellenoberteil 2 und Schellenunterteil 42. Zusätzlich erstreckt sich - wie am besten in den Figuren 1 ersichtlich - ein Anlagezapfen 29 in der Mitte zwischen den beiden Ausbuchtungen 23, 24 vom Unterteil 42 aus gegen das Oberteil 2 gegen die entsprechende Scheibe 10 des Oberteiles 2. Dadurch ist es möglich, daß die Scheibe 10 in der Mitte zwischen den Ausbuchtungen 3 und 4 des Oberteiles gar nicht bis zum Niveau der Stirnfläche 6 herabreichen muß, wodurch wiederum ein enges Zusammenlegen der Ausbuchtungen 3 und 4 möglich ist und zwischen den zwei oder drei eingelegten Kabeln keine Öffnung verbleibt.

### BEZUGSZEICHENLlSTE

- 1: Schelle
- 2: Oberteil
- 3 - 5: Ausbuchtungen
- 6: Stirnfläche
- 7 - 12: dünne Scheiben
- 13 - 15: Verbindungsstege
- 16: Stirnfläche
- 17 - 22: Dünne Scheiben
- 23 - 24: Ausbuchtungen
- 25: kreisförmige Verschlußscheibe
- 26: Stirnfläche
- 27: Durchlaß
- 29: Längsrichtung
- 33 - 35: Verbindungsstege
- 37 - 39: unterschiedliche Radien
- 40: Längsrichtung
- 42: Unterteil

## Patentansprüche

1. Schellen-Bausatz für die zugentlastende Verklemmung von Kabeln unterschiedlichen Außendurchmessers, insbesondere in Anschlußkästen, mit
- einem Oberteil (2),
- einem Unterteil (42),
- wenigstens einem Durchlass für in axialer Längsrichtung (40) die Schelle (1) durchlaufende Kabel, die durch im wesentlichen kreisbogenförmige Ausbuchtungen (3-5, 23, 24) in Ober- und Unterteil (2, 42) gebildet werden,
- welche sich von der dem jeweils anderen Teil der Schelle (1) zugewandten Stirnfläche (6, 26) aus konkav in das Oberteil (2) bzw. Unterteil (42) hinein erstrecken, die Ausbuchtungen (3) in Längsrichtung (29) versetzt unterschiedliche Radien (37-39) entsprechend der Außendurchmesser der zu verklemmenden Kabel aufweisen und
- wobei Oberteil und Unterteil (2, 42) aus wenig nachgiebigem, im wesentlichen harten, gut schneidfähigen Material bestehen,
**dadurch gekennzeichnet, daß**
Ober- und Unterteil (2, 42) aus in axialer Längsrichtung (40) beabstandeten, dünnen Scheiben (7-12, 17-22) bestehen, deren Außenkontur
- auf der Kontaktseite zum Kabel hin durch die entsprechenden Kreisbögen der Ausbuchtungen (3-5, 23, 24) gebildet wird und
- wobei auf der der Kontaktseite abgewandten Seite der Außenkontur des Oberteiles (2) bzw. Unterteiles (42) entspricht und
- die Scheiben (7-12, 17-22) über sich in Längsrichtung (40) erstreckende Verbindungsstege (13-15, 33-35) einstückig miteinander verbunden das Oberteil (2) bzw. Unterteil (42) bilden.

2. Schelle nach Anspruch 1,
**dadurch gekennzeichnet, daß**
die Scheiben (7-12, 17-22) maximal so dick sind wie die axiale Erstreckung mit einem bestimmten Radius (37, 38, 39) innerhalb der Ausbuchtungen (3-5, 23, 24).

3. Schelle nach einem der vorhergehenden Ansprüche,
**dadurch gekennzeichnet, daß**
die Verbindungsstege (13-15, 33-35) entlang der Kontur der Ausbuchtungen (3-5, 23, 24) verlaufen, so daß die axial an einem der anschließenden Bereiche mit gleichem Radius (37, 38, 39) innerhalb der Ausbuchtungen (3-5, 23, 24) mit Ausnahme der stirnseitig ersten Bereiche eine axiale Erstreckung entsprechend der Dicke der entsprechenden Scheibe (7-12, 17-22) plus der axialen Länge des entsprechenden Verbindungssteges (13-15, 33-35) entspricht.

4. Schelle nach einem der vorhergehenden Ansprüche,
**dadurch gekennzeichnet, daß**
die Verbindungsstege (13-15, 33-35) auch entlang der Stirnfläche (16, 26) verlaufen.

5. Schelle nach einem der vorhergehenden Ansprüche,
**dadurch gekennzeichnet, daß**
im Unterteil (42) zwei Ausbuchtungen (23, 24) und im Oberteil (2) drei Ausbuchtungen (3-5) vorhanden sind.

6. Schelle nach einem der vorhergehenden Ansprüche,
**dadurch gekennzeichnet, daß**
innerhalb jeder Ausbuchtung in axialer Richtung in der Mitte ein Bereich mit dem größten Radius (39), in Längsrichtung daran anschließend jeweils einen Bereich mit mittlerem Radius (38) und jeweils stirnseitig ein Bereich mit dem kleinsten Radius (37) angeordnet ist.

7. Schelle nach einem der vorhergehenden Ansprüche,
**dadurch gekennzeichnet, daß**
- der mittlere Bereich eine axiale Erstreckung entsprechend der Dicke einer Scheibe (7-12, 17-22) plus der doppelten axialen Erstreckung eines Verbindungssteges (13-15, 33-35) aufweist,
- sich die Scheibe (19) bzw. Scheiben (19, 20) in der Mitte der axialen Erstreckung befindet, und
- sich beim Unterteil (42) auf einer Seite der Scheibe (19, 20) eine etwa kreisförmige Verschlußscheibe (25) in die Ausbuchtung (23) hineinragt, die so dimensioniert ist, daß sie den gesamten Durchlaß (23) verschließt, wobei die Verschlußscheibe (25) gegenüber dem Ende des Bereiches mit dem größten Durchmesser (39) axial beabstandet und einstückig mit dem Unterteil (42) ausgebildet ist.

8. Schelle nach einem der vorhergehenden Ansprüche,
**dadurch gekennzeichnet, daß**
das Oberteil (2) zusätzlich zu den beiden Ausbuchtungen (3, 4) eine mittig angeordnete, weiter von der Stirnfläche (6) wegreichende, mittlere Ausbuchtung (5) aufweist, die sich von einer Stirnfläche des Oberteiles (2) bis zu dessen mittlerer Scheibe (10) erstreckt, so daß sie stirnseitig durch eine Trennfläche (16) verschlossen wird, die Teil der dieser Ausbuchtung (3) zugewandten Stirnfläche der mittleren Scheibe (10) ist.
